# EUROPEAN PATENT SPECIFICATION

(11) **EP 1 387 632 B1**
(45) Date of publication and mention of the grant of the patent: **22.02.2006**
(21) Application number: 02769629.3
(22) Date of filing: 14.05.2002
(51) Int. Cl.: A47J 27/00

(54) **COOKPOT**
KOCHTOPF
POT DE CUISSON

(30) Priority: 15.05.2001 KR 2001004126 U
(43) Date of publication of application: 11.02.2004
(73) Proprietor: Kim, Byung-Doo, Seoul 158-755 (KR)
(72) Inventor: Kim, Byung-Doo, Seoul 158-755 (KR)
(74) Representative: Howe, Steven
(86) International application number: PCT/KR2002/000900
(87) International publication number: WO 2002/091890

(56) References cited:
- WO-A-99/08580
- FR-A- 945 744
- FR-A- 2 046 681
- GB-A- 462 612
- JP-U- 53 155 775
- JP-U- 62 117 471
- KR-B1- 224 937
- US-A- 1 795 830
- US-A- 5 699 722

## Description

### Technical Field

The present invention relates to a cooking appliance for boiling or parboiling food and, more particularly, to a cook pot used for cooking noodles including instant noodles, and for parboiling vegetables.

### Background of the invention

Conventionally, a coffee pot for making coffee and an oriental herb medicine pot for extracting herb extract have electric heating means built in the bottom. On the other hand, most boiling pots employ as their heat source an external heat source such as a gas range.

When cooking by a gas range using a conventional pot, when food having a lot of water or broth in them reaches the boiling point, the water or broth often overflows with steam, thereby lifting a lid of the pot. If left alone, the flame of the gas range is extinguished by the overflowing water and broth, and in the worse case, it is necessary to supply water and newly add the flavouring according to the additional water in the case of food.

In order to prevent such overflowing, the pot is often left open, without the lid on, even while cooking, or the lid has to be opened now and then. Sometimes the strength of the fire for the cook pot has to be correctly adjusted.

Cooking without a lid has a disadvantage in the thermal efficiency side, lifting a lid often while cooking is troublesome and will cause loss of heat, so more cooking time is required and there may be difficulty in a rational control of the state of cooking.

On the other hand, it is quite troublesome to control the strength of fire directly and difficult to adjust time and extent correctly.

WO 99/08580 discloses a pressure cooker including a lid provided with a steam deflation means whereby vents are opened as the pressure in the cooker deforms the lid.

FR 2046681 discloses a cooking pot including with a heating element arranged to heat the contents of the pot body. In one embodiment the heating element is provided in the lid and in another embodiment the heating element is provided in the pot body.

GB 462612 discloses a cooker where heating elements are arranged within the body of the cooker to irradiate the contents of the cooker.

### Summary of the Invention

Accordingly, the present invention has been made in an effort to solve the problems occurring in the related art, and an object of the present invention is to provide a cook pot which can maximally shorten the time required in heating water or cooking food.

Another object of the present invention is to provide a cook pot which can prevent overflowing of water having great thermal energy even after reaching a boiling point, and can properly keep a steam temperature and a steam pressure, thereby helping save on energy, secure safety, and add to convenience in cooking.

In order to achieve the above objectives, the cook pot according to the present invention, consisting of a pot body which is filled with water or food, and a lid for opening or shutting the opened upper part of the pot body is characterized in that on the inside of the lid a supplemental heating means is placed projecting deep in the pot body; on the other side of the lid and form a side section which projected to connecting direction with said pot body at the border of the outside of the lid, and having a steam deflation means which can control steam deflation according to steam pressure in the cook pot and equipped with a power supply connection section which connects and disconnects to an electric external power supply means at the handle installed on the upper surface of said lid.

Therefore, the cook pot of the present invention, is heated by both an external heating source such as the gas range and by a supplement heating means which formed in the cook pot, so the water and foods in the cook pot has more contact with the heat source and is heated much faster. By forming a steam deflation means which can control the steam deflation according to the steam pressure at the side of the lid, the overflow of stream deflation can be restrained and the temperature and pressure inside of the cook pot can be maintained.

In one aspect, the cook pot according to the present invention is characterized in that, consisting of the lid for opening and shutting the opened upper part of the pot body, form the side section which projected to connecting direction with above pot body at the border of the outside of the cover, and having a steam deflation means which can control the steam deflation according to the steam pressure in the cook pot and formed a handle which have pipe-shaped and the supplement heating means which inserted said handle and connected to a group of the external electric wire cable.

Therefore, the cook pot of the present invention, as double heating by the external heat source such as the gas range with a supplement heating means formed in the cook pot, so water and food in the cook pot are more in contact with the heat source and heated rapidly. And by forming the steam deflation means which can control the steam deflation according to the steam pressure at the side of the lid, which can restrain overflowing of stream deflation and maintain the temperature and pressure in the cook pot.

In another aspect, the cook pot according to the present invention, having a pot body which is filled with water or food and a lid for opening and shutting the opened upper part of the pot body, form a supplement heating means which projected to direction of connecting with the said pot body at the border of the other side of the lid, and form the side section having a steam deflation means can control steam deflation according to the steam pressure in the cook pot and form a handle which has pipe-shap and the supplement heating means which are inserted in said handle and connected to a group of the external electric wire cable.

In one embodiment, the cook pot of the present invention, as built in generating heat coil respectively at the bottom and side of the cook pot, water and food in the cook pot more contact with the heat source and heated rapidly. And by forming the steam deflation means, which can control the steam deflation according to the steam pressure at the side section of the lid, can restrain the overflowing stream deflation and maintain the temperature and pressure in the cook pot.

### Brief Description of Drawings

FIG. 1 is an exploded perspective view illustrating a boiling pot having an electric heating means in accordance with a first embodiment of the present invention;
FIG. 2 is a cross-sectional view taken along the line I-I, of FIG. 1, illustrating an assembled state of the boiling pot;
FiGs. 3 and 4 are partial enlarged cross-sectional views illustrating a power supply section which is in power supply and power shutoff positions, respectively;
FIG. 5 is a cross-sectional view illustrating an in-use status of the boiling pot of FIG. 1;
FIG. 6 is a schematic cross-sectional view illustrating a boiling pot having an electric heating means in accordance with a second embodiment of the present invention; and
FIG. 7 is a schematic cross-sectional view illustrating a boiling pot having an electric heating means in accordance with a third embodiment of the present invention.

### Detailed Description of Preferred Embodiments

Below, the present invention is explained in detail by reference to the preferable examples in the attached drawings;

### Example 1

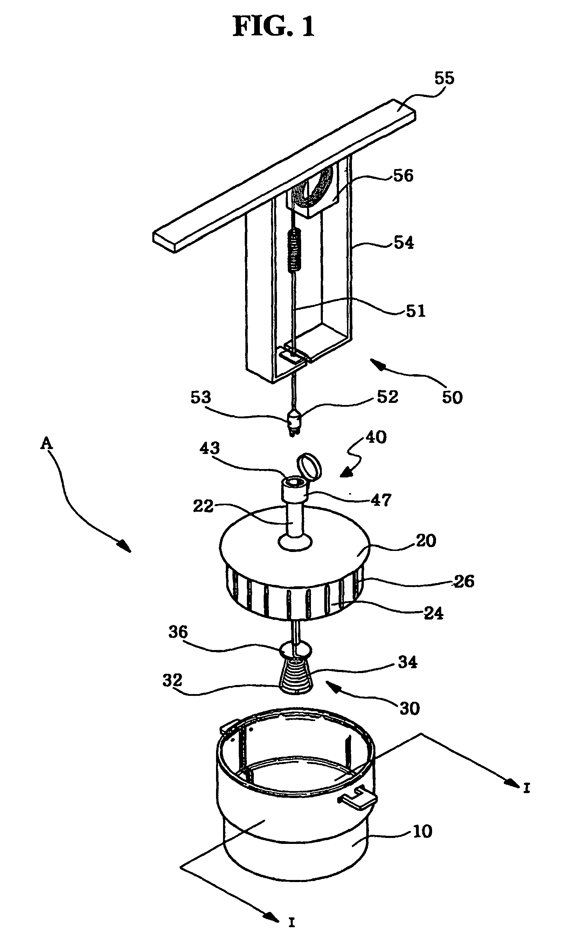

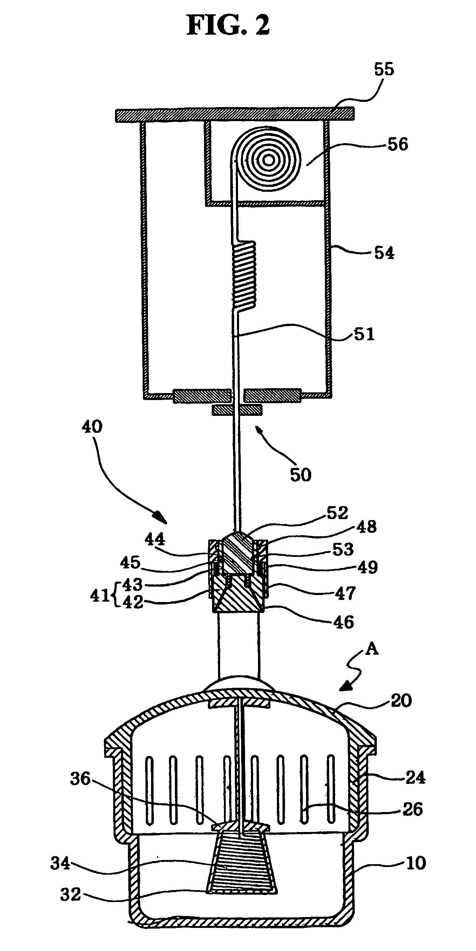

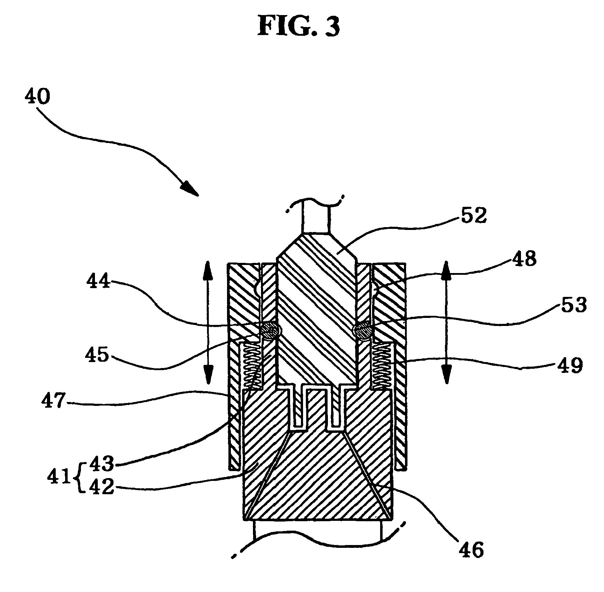

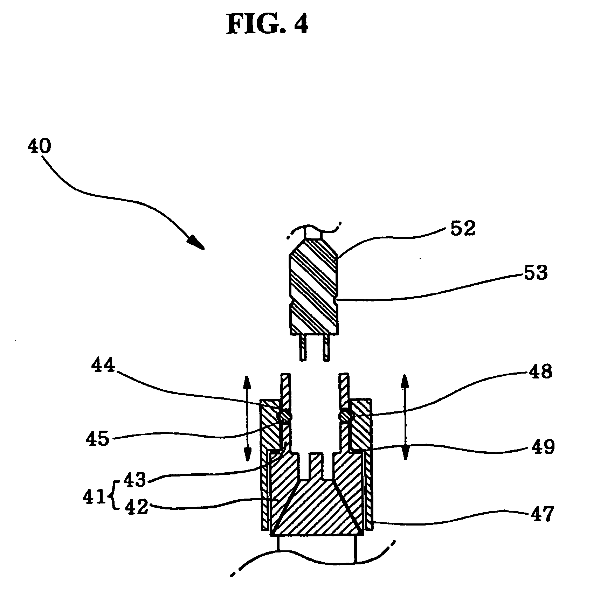

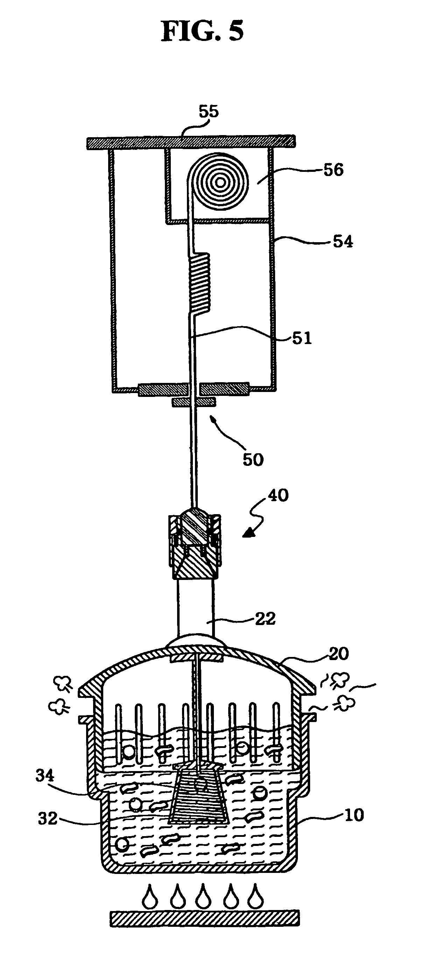

FIG. 1 is an exploded perspective view illustrating a boiling pot having an electric heating means in accordance with a first embodiment of the present invention; and FIG. 2 is a cross-sectional view taken along the line I-I of FIG. 1, illustrating an assembled state of the boiling pot, FIGs. 3 and 4 are partial enlarged cross-sectional views illustrating a power supply section which is in power supply and power shutoff positions, respectively, and FIG. 5 is a cross-sectional view illustrating an in-use status of the boiling pot.

The cook pot A of the example has, as shown in FiGs. 1 and 2, a pot body 10, a lid 20 built in upper part of said pot body 10 and a handle 22 formed on the upper face of the lid 20. A supplemental heating means 30 is formed inside the lid 20 to protrude into the pot body 10 on the other side of the lid 20, and to form a steam deflation means which can control steam deflation according to the steam pressure in the cook pot, and equipped with power supply connection means 40 to connect external power supply means to the built in generating heating coil inside the cook pot.

The supplement heating means 30 is formed as a protrusion into the pot body 10 on the lid 20, and coil section 34 having a truncated cone-shaped contour on the protruded pair of terminals. A heating panel 32 is formed at the outside of the coil section 34 to close the coil section, to prevent the contact with the water and food.

The said coil section 34 of the supplement heating means 30 is formed opposite the pot body on the inside of the lid. More particularly, a flange is formed on each of the pipe-shaped means, a flange is formed on the other side of the lid and another flange on the generating heat plate 32 of the heating means 30 which are formed in one step by using conventional means such as welding or bolts.

The coil section 34 of the supplement heating means 30 is electrically connected with the power connection means 40 formed on the upper end of the handle 22.

The edge of the lid 20, includes a cylindrical side wall 24 arranged to combine with the inside of the pot body 10 around circumference, and the steam deflation means of the cylindrical side section 24. The steam deflation means may have any shape or appearance which is able to emit steam properly. In this example, a slit is formed along the direction of the length (perpendicular to the direction of the circumference) of the cylindrical side 24. The slit opens more and more to emit the steam to the outside as the steam pressure increases, when the steam pressure decreases, the area of the opening is decreased by its own weight.

The power connection means 40 as shown in Figs. 3 and 4, comprises a socket 41 and a pressing section 47 formed on the upper end of the handle 22. The socket 41 includes a body part 42 connected with the lower part of the handle 22 and an opened holder section 43 which has a smaller outer diameter than that of the body part 42 at the upper end of the body part 42 to receive a plug 52 of the power supply means 50. The appearance of the socket 41 is either cylindrical or square, but in this example a cylindrical-shape has been adopted for the sake of convenience of the explanation.

As the diameter of the holder section 43 is smaller than that of the body part 42, there is a step difference at the connection area of the holder section 43 and the body part 42. The press section 47 can move up and down relative to the outside of the holder section 43 and body part 42. Moreover, there is formed a connection terminal electrically connected with the coil section 34 of the heating means 30 in the holder 43, and the connection terminal connects with the connection terminal of a plug 52.

The press section 47, comprises a lower part which has larger diameter than the outer diameter of the body 42 of the socket 41 and an upper part which has a larger diameter than the diameter of the holder section 43. Through holes are formed on the wall of the socket 41 and holder section 43 in the opposite direction to each other. Each of the through holes has a steel ball 45 inserted in it. When a plug 52 is inserted into the socket 41, the steel ball is inserted to an engagement groove 53 which is formed in the plug 52, and maintain connection between the plug 52 and the socket 41.

Further, the inside face of the upper part of the press section 47, that is, at the inside joining with the holder part 43, grooves 48 having arc-shaped which have a similar size as the steel ball 45 are formed facing each other. Said arc-shaped grooves 48 as explain below, which are providing for the rigid body ball to retreat when connecting and disconnecting the plug 52 to the holder part 43, to either insert or extract the steel ball 45 from the inside of the holder part 43.

Meanwhile, the engagement groove 53 having the same size as the steel ball 45 is formed at the outer surface of the plug 52, said engagement groove 53 aligns with the through hole 44 of the holder section 43 when the plug 52 is totally inserted in the holder section 43. When the plug 52 is inserted in the holder section 43 of the socket 41, the steel ball 45 is inserted in the engagement groove 53, to combine the plug 52 and the socket 41.

As explained above, there occurs a step difference at the connection area of the body section 42 of the socket 41 and the holder part 43. The step difference opposes the step difference of the connection area of the lower part and upper part of the pressing section 47. By providing a spring 49 in the step part which is formed between pressing section 47 and socket 41, the pressing section is supported elastically along the direction of the length.

Moreover, because the holder section 43 of said socket 41 is opened to the upside, it is easy to inflow impurities such as steam and dirt when disconnect the plug 52. Therefore, it is preferable to form a cover which can shut off the opened face, said cover is positioned where this cannot be disturbed when inserting or removing, that is, for example being connected by a conventional hinge device of the outer circumference of the press section 47.

Now, explain about the operation of the power supply connection element 40 by using the Figs. 3 and 4. First of all, Fig. 3 shows the connection state of the plug 52 into the socket 41, the steel ball 45 is pressed inwardly by the press section 47, and part of the steel ball 48 is inserted to the engagement groove 53 of the plug 52. In this case, the steel ball acts as a catch by the steel ball 45 being inserted into the engagement groove 53 to catch on, and maintain a stable combination state both of the plug 52 and the socket 41.

Fig. 4 shows the connection or disconnection of the plug 52 to the socket. First, when connecting the plug 52 to the socket 41, if the steel ball 45 is positioned at the groove 48 of the press section 47, the steel ball 45 could retreat into the groove 48. Therefore, the plug 52 inserted to the holder part 43 of the socket 41 without disturb of the rigid body ball 45. When the plug 52 to the holder section 43 is connected entirely, the press section 47 is released. At this time, the press section 47 is returned to the original position, and the plug 52 and the socket are maintained in a stable connection state as shown in Figure 3.

While, the operation of pulling out the plug 52 from the holder 43 to the socket 41 is compared with the above connection, it has a only difference of the inserting/ separating operation and the other are equal, the detail description is omitted.

The body 42 of the socket 41 may include a plurality of drain holes 46 which are connected with the opened bottom of the holder section 43 for the discharge of water from inside the holder section 43 by the condensation of the steam occurred in cooking. The socket 41 and plug 52 are insulated by a conventional method.

The pressing section 47 is maintained at the socket 41 by the maintaining means (not illustrated). In other words, the pressing section 47 is maintained on the socket 41 with as much power which can endure elastic strength of the spring 49. The maintaining means can be, for instance, a stopper having a protrusion which protrudes in a direction of radius, or rib and groove-shapes which are formed on each of the lower inside of the pressing section 47 and outside of the socket 41, however the detail description and drawing are omitted.

Next, the power supply means 50 according to the present example are explained. The power supply means 50 are for supply of external power to the supplement heating means 30, and comprises an electric cable 51 connected to an end of the power supply (not illustrated), and the plug 52 which connects the other end to the electrical cable 51.

The electrical cable 51 is preferably freely extendible to conform to the formed position of the cook pot A. For this purpose, a keeping unit 54 having a box-shape is formed which can keep and withdraw the electrical cable 51, and fixed on the wall by a supporter bar 55 which is formed at the one side of the keeping unit 54 (the opposite direction of the direction of withdraw electrical cable 51) and a winding section 56 is provided which can elastically pull in the electrical cable inside of the keeping unit 54.

Further, a withdraw hole is formed on the side of the keeping unit 54, the withdraw hole allowing the electrical cable 51 to pass but not the plug 52 which formed with the step section. Therefore, when not cooking, the electrical cable 51 is in the keeping unit 54 and when cooking, the plug 52 is pulled to easily withdraw the required length of the electrical cable 51.

In this embodiment example, the supplement heating means 30 is turned on/off and the temperature is controlled by a temperature control device (not illustrated).

Below, the process of the using the cook pot of the example 1 will be explained by reference to Fig. 5 according to the present invention.

First, a cook pot with its pot body 10 filled with water or food is put on a heating means like a gas range and the plug 52 is withdrawn and inserted in the socket 41 formed at the upper end of the handle 22.

Next, the heating means is turned on and if the power switch of the temperature control element (not illustrated) is fumed on, water or food in the cook pot is heated quickly by the external heating means (ex. Gas range) and supplement heating element 30 in the cook pot A, that is heating plate 32 having coil section 34.

Once water or food start boiling, by turning off the power switch, or by stopping or decreasing the heat supply from the supplement-heating element 30 by control temperature, energy can be saved and over heating of the water or food prevented.

On the other hand, if steam is excessively generated to lift the lid 20, as the steam discharge slots 26 are increasingly opened in proportion to an increase in steam pressure, excessive steam is discharged to the outside through the steam discharge slots 26. Consequently, overflowing of water and/or food item is prevented. Thereafter, as the pressure falls, the cover 20 is automatically lowered by its own weight to close the slit on the side of the pot body 12. In this way, it is possible to maintain a constant steam pressure and a constant temperature and thereby cook the food item within a short period of time.

If cooking of the food item is completed in this manner, as the user presses the press section 47, separating the plug 52 from the holder section 43. At this time, the plug 52 and electrical cable 51 can quickly be put in the putting part 54 by the elastic power of the winding section.

### Example 2

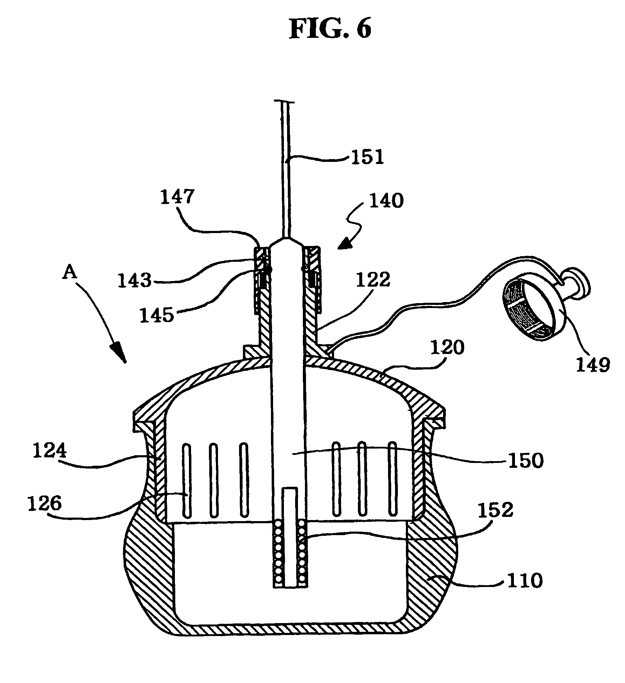

A second embodiment according to the present invention, is shown in Fig. 6. The cook pot comprises the pot body 110, a lid 120 inserted in the pot body 110 and a handle formed on the upper face of the lid 120. The lid includes a side which projects in the connected direction with above pot body 110 at the border of the other side of the lid. The handle 122 which has a pipe-shape for inserting the supplement heating means 150 from the outside.

In the cook pot A of the first preferred embodiment of the present invention, the supplement heating means 30 is fixed on the lid 20 and the external power supply means 50 is separate and connects to a power supply connecting means formed on the upper end of the handle. There are differences in the second embodiment such as the supplement heating element 150 can be inserted and separated by a through hole formed on the handle 122, and connects to the supplement heating means 150 directly without opening the power supply connecting means to an external power supply means.

Though not illustrated in detail in the Fig. 6, the connecting means 140 which connects the supplement heating means 150 can be formed on the upper end of the handle 122. A holder part 143 in the connecting part 140, a steel ball 145 installed on a through hole which is formed on the wall of the holder part 143, a pressing section 147 which is inserted in the holder section 143, a groove formed on the inside of the pressing section 147 and an engagement groove formed on the outside of the supplement heating means 150 and having same composition of the first example, and, so detailed description of these compositions is omitted.

As shown in the Fig. 6, the handle 122 is formed projecting from the upper face of the lid 120, and the handle 122 is formed in a pipe-shape, in which the auxiliary heating means 150 can be inserted.

On the upper end of the handle 122, a connecting means 140 is formed to be connected with the supplement heating means 150, the composition of connecting means 140 in the example is same with those of the socket 41 and pressing section 47 of example 1. However, the only difference is in the first example, the plug 52 is inserted to the inside of the holder section 43 of the socket 41, and in the present example, a rod-shaped heating means via connecting means 140 to cook pot A. In other words, an engagement groove 53 with an arc-shaped for insertion of the steel ball 45 is formed on the outside of the plug 52, and an engagement groove identical with those in Example 1 are formed on the outer surface of the rod-shaped supplement heating means 150 in Example 2. The other compositions or operation are same with the first example, so detailed description is omitted.

In the present example, one end part of the supplement heating means 150 is connected with an electrical cable 151 and the end has a coil 152 along part of the length of the rod- shaped supplement means 150. Here, the coil 152 is electrically connected with the electrical cable 151.

On the other side, the pipe-shaped handle 122 is formed when the supplement heating means 150 is not inserted in the handle 122, the lid 120 is installed on the pot body 110 the cook pot A always vent with the outer air. For this reason, water or food in the cook pot boiled may be subject to the inflow of dusts and impurities into the cook pot while cook pot A is not in use. Therefore, to solve these problems, it is preferable to provide a cover 149 which is installed on the upper end of the handle and can be opened or shut. In this example, the cover 149 can connect with the lid 120 or the handle 122 by a string to prevent loss.

Next, the method of the using of the cook pot A according to the second embodiment in the present invention is explained.

First, the cook pot is filled with water and food on the heating means such as a gas range and is heated. At this time, the cover 149 which installed on the upper end of the handle 122 is opened and, by pressing the pressing section 147 of the connecting means 140, the rod-shaped supplement heating means 150 is inserted into the handle 122. Power is then supplied to the supplement heating means 150 by turning on the switch of the temperature control means.

When water or food boiling in the cook pot A, the supplement heating means 150 is removed or the opening of the upper end of the handle 122 is shut off by the cover to control the temperature of the supplement heating means 150 by the temperature control means, whereby cooking can be maintain the temperature and pressure in the cook pot A.

### Example 3

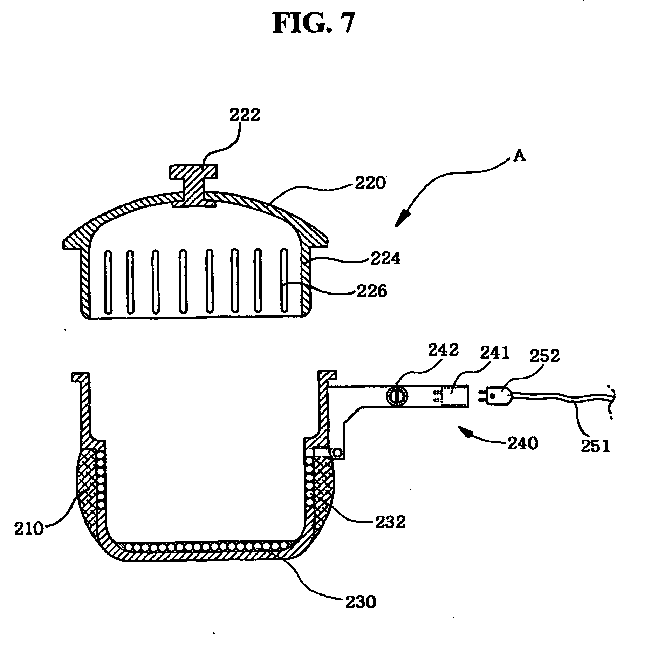

Next, a third embodiment according to the present invention, will be explained with reference to Fig. 7.

As shown in the Fig. 7, the cook pot A of the third embodiment is characterized in that the side which is formed to be projected to the direction of the combination of the pot body 210 on the border of the outside of the lid 220 and having a steam deflation element which can control stream deflation according to the steam pressure in the cook pot, and with the heat generating coil 230, 232 built at the bottom and side and power supply means 240 which is connected with the external power supply means which is electrically connected with the heat generating coil 230, 232. Further, the ordinary handle 222 is formed on the top of the lid 220 of the cook pot A.

The power supply connection means 240 has a socket 241 which is connected to the temperature control switch 242 and plug 252, and is electrically connected with the heat generating coil 230,232. Herein, it is preferable to form the handle with the power supply connecting means 240 for the simple composition. In this case, the socket 241 and temperature control switch 242 are formed preferably on the end and side of the handle respectively.

The steam deflation element in the present embodiment which comprises a slit 226 which is formed on the side 224 of the cover 220 along the direction of the length, as with the first and second embodiment.

### Industrial Applicability

According to the present invention, the time required to heat water from a normal temperature to boiling point can be significantly shortened, and energy consumption decreased.

Also, according to the cook pot of the present invention, it is not necessary to frequently open and shut a lid, as steam is controlled by the steam deflation means which is formed on the lid so, not only maintain the temperature and pressure of the water or food but also prevent accidents which occur when frequent opening and shutting a lid while cooking.

## Claims

1. A cook pot comprising:
a pot body (10;110;210) including an opening, the pot body (10;110;210) being arranged to contain water or food;
a lid (20;120;220) arranged for opening or closing the opening of the pot body (10;110;210); and,
a steam deflation means provided on the lid (20;120;220) to control deflation of steam from the pot body (10;110;210) dependent upon the steam pressure in the cook pot, the steam deflation means have a shape able to emit steam properly,
**characterized in that** the steam deflation means are provided in a depending side section (24;124;224) of the lid (20;120;220) that projects into the pot body (10;110;210), and **in that** an auxiliary heating means (30;150;230;232) is arranged within the pot body (10;110;210) with a power supply connection (40;140;240) for connecting and disconnecting electrical power to the auxiliary heating means (30;150;230,232).

2. A cook pot according to Claim 1, in which the auxiliary heating means (30) is formed on an inner side of the lid (20).

3. A cook pot according to Claim 2, in which the auxiliary heating means (30) includes a coil (34) and a heating panel (32) arranged to close the outer periphery of the coil (34).

4. A cook pot according to Claim 1. in which the lid (120) includes a pipe-shaped handle (122) and in which the auxiliary heating means (150) is arranged to be inserted into the handle (122) and connected to an external electric cable (151).

5. A cook pot according to Claim 4, in which the auxiliary-heating means (150) is in the form of a bar, and includes a coil (152) at one end that is electrically connected to the electric cable (151).

6. A cook pot according to Claim 1, in which the auxiliary heating means (230, 232) comprises a coil formed in the bottom and side of the pot body (210). plurality of slits formed lid (20; 120; 220) are along the

7. A cook pot according to any one of the preceding claims, in which the steam deflation means comprises a plurality of slits (26; 126, 226) provided in the depending side section (24; 124; 224) of the lid (20; 120; 220) along the direction of the length.

## Patentansprüche

1. Kochtopf umfassend:
Einen Topfkörper (10; 110; 210) einschließlich einer Öffnung, wobei der Topfkörper (10; 10; 210) angeordnet ist Wasser oder Nahrungsmittel zu enthalten;
Einen Deckel (20; 120; 220) der zum Öffnen oder Schließen der Öffnung des Topfkörpers (10; 110; 210) angeordnet ist; und,
Ein Dampfablassmittel, das am Deckel (20; 120; 220) bereitgestellt ist, um Dampfablass von Topfkörper (10; 110; 210) abhängig vom Dampfdruck im Kochtopf zu steuern, wobei die Dampfablassmittel eine Form haben, die fähig ist Dampf richtig zu emittieren,
**dadurch gekennzeichnet, dass** die Dampfablassmittel in einem abhängenden Seitenteil (24; 124; 224) des Deckels (20; 120; 220) bereitgestellt sind, das in den Topfkörper (10; 110; 210) hineinragt und **dadurch**, dass ein Hilfsheizmittel (30; 150; 230; 232) im Topfkörper (10; 110; 210) mit einem Stromversorgungsanschluss (40; 140; 240) zum Anschließen und Trennen elektrischen Stroms zum Hilfsheizmittel (30; 150; 230; 232) angeordnet ist.

2. Kochtopf nach Anspruch 1, in dem das Hilfsheizmittel (30) auf einer Innenseite des Deckels (20) geformt ist.

3. Kochtopf nach Anspruch 2, in dem das Hilfsheizmittel (30) eine Spirale (34) und ein Heizpaneel (32) einschließen, das nahe der äußeren Peripherie der Spirale (34) angeordnet ist.

4. Ein Kochtopf nach Anspruch 1, in dem der Deckel (120) einen rohrförmigen Griff (122) einschließt und, in dem das Hilfsheizmittel (150) zum Einschieben in den Griff (122) angeordnet und an ein externes Elektrokabel (151) angeschlossen ist.

5. Kochtopf nach Anspruch 4, in dem das Hilfsheizmittel (150) die Form eines Stabs hat und eine Spirale (152) an einem Ende einschließt, die elektrisch an das Elektrokabel (151) angeschlossen ist.

6. Kochtopf nach Anspruch 1, in dem das Hilfsheizmittel (230; 232) eine Spirale umfasst, die im Boden und der Seite des Kochtopfkörpers (210) geformt ist.

7. Kochtopf in Übereinstimmung mit einem beliebigen der vorherigen Ansprüche, in dem das Dampfablassmitteleine Velheit von Schlitzen (26; 126; 226) umfasst, die im abhängenden Seitenteil (24; 124; 224) des Deckels (20; 120; 220) entlang der Längsrichtung bereitgestellt sind.

## Revendications

1. Pot de cuisson comportant:
un corps de pot (10 ; 110 ; 210) comprenant une ouverture, le corps de pot (10 ; 110 ; 210) étant agencé pour contenir de l'eau ou de la nourriture ;
un couvercle (20 ; 120 ; 220) agencé pour ouvrir ou fermer l'ouverture du corps de pot (10; 110;210);et,
des moyens d'évacuation de vapeur mis en oeuvre sur le couvercle (20 ; 120 ; 220) pour contrôler l'évacuation de la vapeur en provenance du corps de pot (10 ; 110 ; 210) en fonction de la pression de la vapeur dans le pot de cuisson, les moyens d'évacuation de vapeur ayant une forme permettant de dégager la vapeur correctement,
**caractérisé en ce que** les moyens d'évacuation de vapeur sont mis en oeuvre dans une section latérale dépendante (24 ; 124 ; 224) du couvercle (20 ; 120 ; 220) qui se projette dans le corps de pot (10 ; 110 ; 210) et **en ce qu'**un moyen de chauffage auxiliaire (30 ; 150 ; 230 ; 232) est agencé à l'intérieur du corps de pot (10 ; 110 ; 210) avec une connexion d'alimentation électrique (40 ; 140; 240) pour connecter l'alimentation électrique sur le moyen de chauffage auxiliaire (30 ; 150 ; 230 ; 232) et la déconnecter de ce dernier.

2. Pot de cuisson selon la revendication 1, dans lequel le moyen de chauffage auxiliaire (30) est formé sur un côté intérieur du couvercle (20).

3. Pot de cuisson selon la revendication 2, dans lequel le moyen de chauffage auxiliaire (30) comprend un serpentin (34) et un panneau chauffant (32) agencé pour fermer la périphérie extérieure du serpentin (34).

4. Pot de cuisson selon la revendication 1, dans lequel le couvercle (120) comprend une poignée en forme de tuyau (122) et dans lequel le moyen de chauffage auxiliaire (150) est agencé de telle manière à être inséré dans la poignée (122) et connecté à un câble électrique extérieur (151).

5. Pot de cuisson selon la revendication 4, dans lequel le moyen de chauffage auxiliaire (150) a la forme d'une barre, et comprend un serpentin (152) à une extrémité avec connexion électrique à un câble électrique (151).

6. Pot de cuisson selon la revendication 1, dans lequel le moyen de chauffage auxiliaire (230, 232) comporte un serpentin formé dans le fond et le côté du corps de pot (210).

7. Pot de cuisson selon l'une quelconque des revendications précédentes, dans lequel les moyens d'évacuation de vapeur comprennent une pluralité de fentes (26 ; 126 ; 226) mises en oeuvre dans la section latérale dépendante (24 ; 124 ; 224) du couvercle (20 ; 120 ; 220) dans le sens de la longueur.
